(19) **Europäisches Patentamt European Patent Office Office européen des brevets**

(11) **EP 3 670 081 B1**

(12) **EUROPEAN PATENT SPECIFICATION**

(45) Date of publication and mention of the grant of the patent:
**25.09.2024 Bulletin 2024/39**

(21) Application number: **18896269.0**

(22) Date of filing: **20.12.2018**

(51) International Patent Classification (IPC):
**B24B 37/08** (2012.01)  **B24B 9/00** (2006.01)
**C03C 19/00** (2006.01)  **F21V 8/00** (2006.01)
**B24B 7/24** (2006.01)

(52) Cooperative Patent Classification (CPC):
**B24B 7/241; B24B 9/00; B24B 37/08;**
G02B 6/0065; G02B 6/0076; Y02P 40/57

(86) International application number:
**PCT/JP2018/046973**

(87) International publication number:
**WO 2019/131431 (04.07.2019 Gazette 2019/27)**

(54) **DISK-SHAPED GLASS SUBSTRATE MANUFACTURING METHOD, GLASS SUBSTRATE MANUFACTURING METHOD AND LIGHT GUIDE PLATE MANUFACTURING METHOD**

VERFAHREN ZUR HERSTELLUNG EINES SCHEIBENFÖRMIGEN GLASSUBSTRATS, VERFAHREN ZUR HERSTELLUNG EINES GLASSUBSTRATS UND LICHTLEITERPLATTENHERSTELLUNGSVERFAHREN

PROCÉDÉ DE FABRICATION DE SUBSTRAT EN VERRE EN FORME DE DISQUE, PROCÉDÉ DE FABRICATION DE SUBSTRAT EN VERRE ET PROCÉDÉ DE FABRICATION DE PLAQUE GUIDE DE LUMIÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.12.2017 JP 2017251419**

(43) Date of publication of application:
**24.06.2020 Bulletin 2020/26**

(60) Divisional application:
**23218195.8 / 4 368 340**

(73) Proprietor: **Hoya Corporation**
**Tokyo 160-8347 (JP)**

(72) Inventors:
• **TAKANO, Masao**
  **Tokyo 160-8347 (JP)**

• **NAKAYAMA, Kashio**
  **Tokyo 160-8347 (JP)**

(74) Representative: **Vossius & Partner**
**Patentanwälte Rechtsanwälte mbB**
**Siebertstrasse 3**
**81675 München (DE)**

(56) References cited:
WO-A1-2013/031547    WO-A1-2013/100154
WO-A1-2014/103986    WO-A1-2016/190230
WO-A1-2016/199612    JP-A- 2006 236 561
JP-A- 2008 216 835    JP-A- 2009 035 461
JP-A- 2015 050 296    JP-A- 2015 064 920
JP-A- 2015 181 082    JP-B2- 5 533 355
US-A1- 2014 033 768    US-A1- 2014 176 848

## Description

Technical Field

The present invention relates to a method for manufacturing a disk-shaped glass substrate, a method for manufacturing a glass substrate, a method for manufacturing a light-guiding plate.

Background Art

Some head-mounted displays can provide augmented reality by displaying images overlaid on landscapes. In this type of head-mounted display, there are cases where a light-guiding body made of light-transmitting glass is used in a display unit thereof.

A light-guiding body provided with a glass plate is disclosed in PTL1, for example. As disclosed in PTL1, there is demand for reducing the weight of a head-mounted display because the head-mounted display is mounted on a head portion, and thus the glass plate to be used in the light-guiding body is desired to have a small substrate thickness. Also, in order to display high-resolution images, glass plates with high surface quality regarding parallelism between two main surfaces of the glass plate and surface roughness thereof are desired, for example.

Citation List

Patent Literature

PTL1: WO 2017/018375 A1
WO 2013/100154 A1 discloses a manufacturing method for a magnetic-disk glass substrate.
JP 5 533355 B2 relates to an apparatus and method of polishing a glass substrate.
JP 2015 181082 A relates to a glass substrate for a magnetic recording medium.
WO 2016/190230 A1 discloses a display panel production method. WO
2013/031547 A1 relates to a glass plate and a method for manufacturing the same.

Summary of Invention

Technical Problem

However, in general, it is difficult to stably mass produce glass plates with a small substrate thickness (referred to as "thin glass substrate" hereinafter) with high surface quality.

If thin glass substrates of a large size and high surface quality are manufactured, the size of a glass substrate that is a material of the thin glass substrate (referred to as a "glass blank" hereinafter) also increases. A frictional force applied to main surfaces of such a large glass blank that are to be processed in processing such as grinding and polishing is unlikely to be uniform. Thus, the surface quality and substrate thickness thereof will be ununiform, and it is difficult to precisely process a large glass blank, in particular, to be thin and have high surface quality.

Also, in the case of a large glass blank, it is highly likely that the glass blank will be damaged when the glass blank is handled before and after a processing process is performed, for example, when the glass blank is being installed in an apparatus for performing grinding processing, polishing processing and the like, and when the glass blank is being transferred between these apparatuses. Thus, the yield obtained when large and thin glass substrates with high surface quality are manufactured is significantly low.

Also, if a thin glass substrate having corner portions, such as a rectangular thin glass substrate, is manufactured, for example, usually, a thin glass substrate with corner portions is manufactured by processing a glass blank having corner portions. In this case, in particular, in the vicinities of the corner portions, a frictional force applied to surfaces thereof that are to be processed in processing such as grinding and polishing is unlikely to be uniform. Thus, it is extremely difficult to highly precisely process a glass blank having corner portions to be thin with high surface quality.

Even if a thin glass substrate having corner portions is cut out from a thin glass substrate whose size is larger than that of the thin glass substrate having corner portions, as described above, the surface quality and the substrate thickness thereof are unlikely to be uniform in the manufacturing of the large and thin glass substrates. Thus, it is highly likely that variations will occur in the surface quality and the substrate thickness of the cutout thin glass substrate having corner portions depending on which portion the thin glass substrate is cut out from the large and thin glass substrate. Also, as described above, the yield obtained when large and thin glass substrates are manufactured is significantly low. In this manner, even if a thin glass substrate to be manufactured is cut out from a thin glass substrate whose size is larger than that of the thin glass substrate to be manufactured, it is extremely difficult to stably mass produce thin glass substrates with high surface quality and a highly precise substrate thickness.

The present invention is made in view of the above-described circumstances, and an object thereof is to provide a method for manufacturing a disk-shaped glass substrate with which thin glass substrates with high surface quality and a highly precise substrate thickness can be stably mass produced. Solution to Problem

The invention is defined in the independent claims. Dependent claims describe preferred embodiments.

Advantageous Effects of the Invention

According to the present invention, it is possible to stably mass produce thin glass substrates having high surface quality and a highly precise substrate thickness.

Brief Description of Drawings

FIG. 1 is a perspective view of a disk-shaped glass substrate according to one embodiment of the present invention.

FIG. 2 is an enlarged diagram of a cross-section CS1 of the disk-shaped glass substrate shown in FIG. 1 in the vicinity of the left end thereof when viewed from a front side.

FIG. 3 is a flowchart of processes included in a method for manufacturing a disk-shaped glass substrate according to one embodiment of the present invention.

FIG. 4 is a perspective view of a disk-shaped glass blank that is first prepared using the method for manufacturing a disk-shaped glass substrate according to one embodiment of the present invention.

FIG. 5 is an enlarged diagram of a cross-section CS2 of the disk-shaped glass blank shown in FIG. 4 in the vicinity of the left end thereof when viewed from a front side.

FIG. 6 is an enlarged diagram of the cross-section of the disk-shaped glass blank that has been chamfered in the vicinity of the left end thereof when viewed from a front side.

FIG. 7 is a diagram showing a configuration of a double-side grinding apparatus according to one embodiment.

FIG. 8 is a flowchart of processes included in a method for manufacturing a thin glass substrate according to one embodiment of the present invention.

FIG. 9 is a diagram showing one example of a portion at which a disk-shaped glass substrate is cut in cutout processing included in the method for manufacturing a thin glass substrate according to one embodiment.

FIG. 10 is a flowchart of processes included in a method for manufacturing a light-guiding plate according to one embodiment of the present invention.

FIG. 11 is a diagram showing one example of a light-guiding plate produced using the method for manufacturing a light-guiding plate according to one embodiment.

Description of Embodiments

Hereinafter, one embodiment of the present invention will be described with reference to the drawings. The same elements are given the same reference numerals through out of the drawings. Although the terms up, down, front, rear, left, and right will be used in the description and drawings of embodiments of the present invention, these terms will be used to describe directions and are not intended to limit the present invention. Ratios of the sizes of portions are changed in the drawings as appropriate in order to facilitate understanding.

(Configuration of disk-shaped glass substrate 100)

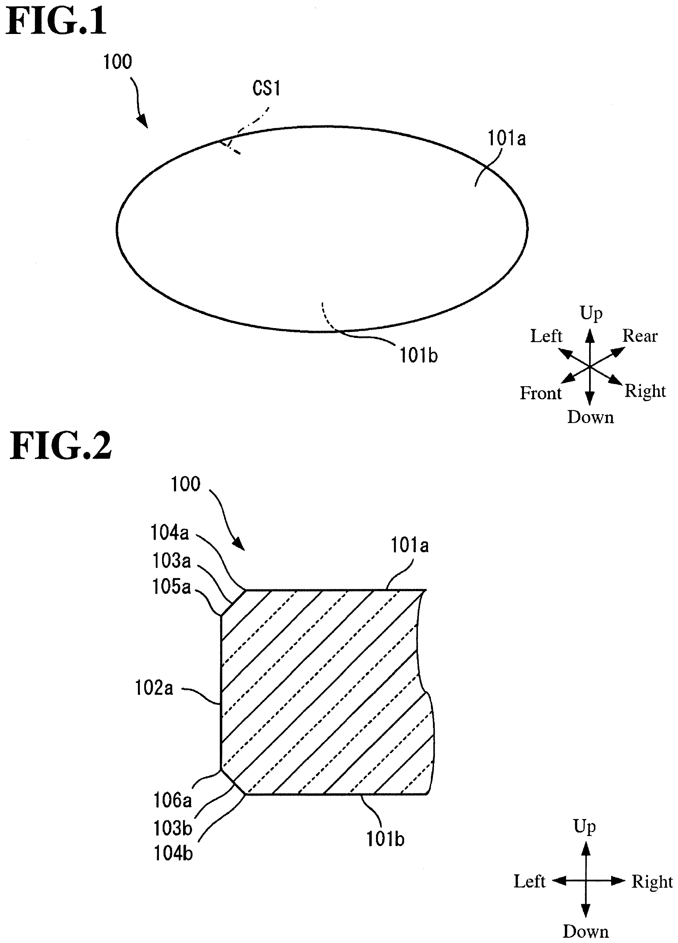

A disk-shaped glass substrate 100 according to one embodiment of the present invention is a thin plate that has a disk shape and is made of glass, as shown in FIG. 1 showing a perspective view thereof and FIG. 2 showing an enlarged cross-sectional view thereof. The disk-shaped glass substrate 100 preferably has a refractive index of 1.60 or more.

A "thin glass substrate" hereinafter refers to a glass plate having a small plate thickness.

The disk-shaped glass substrate 100 is an intermediate for cutting out one or more thin glass substrates whose size is smaller than that of the disk-shaped glass substrate 100. A cutout thin glass substrate is used as a light-guiding plate, for example, alone, or by combining multiple cutout thin glass substrates as appropriate. If a plurality of cutout thin glass substrates are combined and used as a light-guiding plate, typically, the cutout thin glass substrates are stacked on each other and used as a light-guiding plate. A light-guiding body is applied to a display apparatus such as a head-mounted display, for example.

The disk-shaped glass substrate 100 has two main surfaces 101a and 101b, an outer circumferential edge surface 102a, and chamfering surfaces 103a and 103b. FIG. 2 is an enlarged view of a cross-section CS1 surrounded by a chain line shown in FIG. 1 when viewed from a front side shown in FIG. 1. The cross-section CS1 is a plane extending in an up-down direction and a right-left direction, and is a cross-section extending in the diameter direction of the main surfaces 101a and 101b. Because the cross-section CS1 shown in FIG. 2 is extremely thin, the cross-section CS1 surrounded by the chain line appears as a substantially thick straight line.

The two main surfaces 101a and 101b are substantially circular flat surfaces that are arranged side-by-side in the up-down direction. The diameter of each of the two main surfaces 101a and 101b is 70 [mm (millimeters)] to 210 [mm], for example.

The length between the two main surfaces 101a and 101b in the up-down direction, that is, the substrate thickness of the disk-shaped glass substrate 100, excluding the outer circumferential edge surface 102a and the chamfering surfaces 103a and 103b, is 50 [μm (micrometers)] to 500 [μm], for example. Note that the substrate thickness of the disk-shaped glass substrate 100, excluding the outer circumferential edge surface 102a and the chamfering surfaces 103a and 103b, is preferably 100 [μm] to 400 [μm], and more preferably 100 [μm] to 350 [μm].

The parallelism between the two main surfaces 101a and 101b is less than 1.0 [μm], for example, preferably 0.95 [μm] or less, and more preferably 0.5 [μm] or less. The parallelism between the two main surfaces 101a and 101b may be 0.05 [μm] or more.

Here, the "parallelism" refers to a so-called value called TTV (Total Thickness Variation), and indicates the difference between the maximum value and the minimum value of the length of the entire disk-shaped glass substrate 100 measured in the substrate thickness direction (the up-down direction in this embodiment) using one of the main surfaces 101a and 101b as a reference plane.

The roughness (root mean square roughness) Rq of the two main surfaces 101a and 101b is 0.4 [nm] or less, for example.

The outer circumferential edge surface 102a is a surface forming an end of the disk-shaped glass substrate 100 in the radial direction thereof, and is a curved surface that slightly extends substantially in the up-down direction. Specifically, the outer circumferential edge surface 102a has a substantially circular shape when viewed from above or below, and has an extremely elongated rectangular shape that is short in the up-down direction when viewed from a side. Here, a "side" indicates a direction perpendicular to the up-down direction.

The chamfering surfaces 103a and 103b are surfaces that are respectively inclined between the two main surfaces 101a and 101b and the outer circumferential edge surface 102a and that respectively connect the two main surfaces 101a and 101b and the outer circumferential edge surface 102a, and each have an annular shape when viewed from above or below. That is, the upper chamfering surface 103a is an annular surface that is inclined between an outer edge portion 104a of the upper main surface 101a and an upper end portion 105a of the outer circumferential edge surface 102a and that connects the outer edge portion 104a and the upper end portion 105a. The lower chamfering surface 103b is an annular surface that is inclined between an outer edge portion 104b of the lower main surface 101b and a lower end portion 106a of the outer circumferential edge surface 102a and that connects the outer edge portion 104b and the upper end portion 106a.

The chamfering surfaces 103a and 103b each form a straight line when viewed from a side in this embodiment (see FIG. 2). Also, as described above, the chamfering surfaces 103a and 103b are "inclined", and thus intersect the outer circumferential edge surface 102a and intersect the two main surfaces 101a and 101b. The chamfering surfaces 103a and 103b according to this embodiment intersect the outer circumferential edge surface 102a and respectively intersect the two main surfaces 101a and 101b at obtuse angles with respect thereto (see FIG. 2). Note that the chamfering surfaces 103a and 103b may each form a curved line when viewed from a side.

The configuration of the disk-shaped glass substrate 100 according to this embodiment has been described above.

The disk-shaped glass substrate 100 according to this embodiment is an intermediate for cutting out one or more thin glass substrates. Also, the disk-shaped glass substrate 100 has high surface quality and a highly precise substrate thickness, whereby a portion excluding the outer circumferential edge surface 102a and the chamfering surfaces 103a and 103b has a substrate thickness of 100 [μm] to 350 [μm], and the parallelism between the two main surfaces 101a and 101b is less than 1.0 [μm]. Thus, it is possible to cut out a thin glass substrate having high surface quality and a highly precise substrate thickness.

Also, the disk-shaped glass substrate 100 is provided with the chamfering surfaces 103a and 103b. Thus, the disk-shaped glass substrate 100 is unlikely to be damaged when a thin glass substrate is cut out, and it is possible to cut out thin glass substrates at a yield higher than in a case where no chamfering surfaces 103a and 103b are provided.

Also, the disk-shaped glass substrate 100 is not only provided with the chamfering surfaces 103a and 103b but also has a disk shape, and thus, as will be described later in detail, even relatively large and thin glass substrates having high surface quality and a highly precise substrate thickness can be stably manufactured at a high yield.

Thus, it is possible to stably mass produce thin glass substrates having high surface quality, a highly precise substrate thickness, and a desired shape.

Also, the disk-shaped glass substrate 100 may have a refractive index of 1.60 or more, and the parallelism between the two main surfaces 101a and 101b may be 0.5 [μm] or less. Accordingly, due to the same reasons as above, it is possible to stably mass produce thin glass substrates having high surface quality, a highly precise substrate thickness, and a desired shape.

Also, a thin glass substrate that is cut out from the disk-shaped glass substrate 100 may be used alone as a light-guiding plate, or a plurality of thin glass substrates that are cut out therefrom may be combined together using a method such as stacking and the combined substrate may be used as a light-guiding plate, for example. Accordingly, due to the same reasons as above, it is possible to stably mass produce light-guiding plates having high surface quality, a highly precise substrate thickness, and a desired shape.

(Method for manufacturing disk-shaped glass substrate 100)

Hereinafter, a method for manufacturing the disk-shaped glass substrate 100, which is an intermediate, will be described.

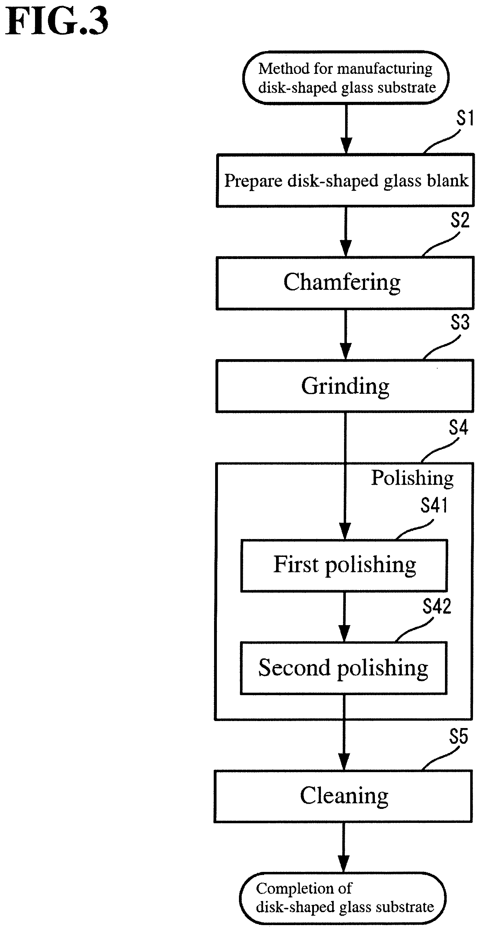

The method for manufacturing the disk-shaped glass substrate 100 is a method for manufacturing the disk-shaped glass substrate 100 and includes processes shown in the flowchart shown in FIG. 3, for example.

A disk-shaped glass blank 107a is prepared (step S1).

The disk-shaped glass blank 107a is a glass blank that has a disk shape and whose substrate thickness is larger than that of the disk-shaped glass substrate 100 manufactured as an intermediate. The disk-shaped glass blank 107a has a substrate thickness t1 of 0.5 [mm] to 1.0 [mm], for example. The disk-shaped glass blank 107a preferably has a refractive index of 1.60 or more. The accuracy of the substrate thickness and the surface quality of main surfaces 101c and 101d may be lower than those of the disk-shaped glass substrate 100.

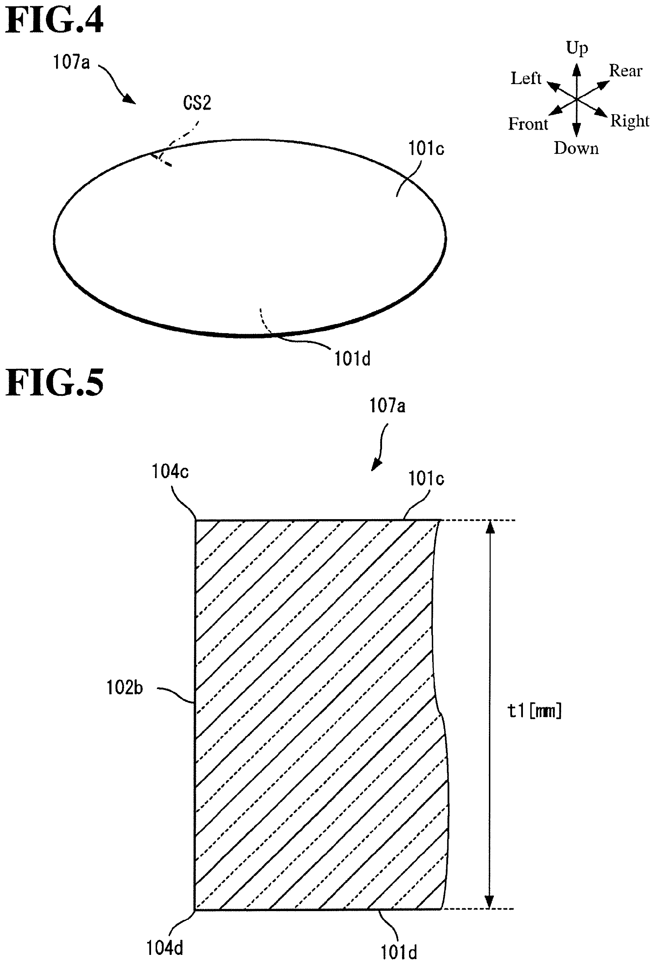

The disk-shaped glass blank 107a has two main surfaces 101c and 101d, and an outer circumferential edge surface 102b, as shown in FIG. 4 showing a perspective view thereof and FIG. 5 showing an enlarged cross-sectional view thereof.

FIG. 5 is an enlarged view of a cross-section CS2 surrounded by the chain line shown in FIG. 4 when viewed from a front side shown in FIG. 4. The cross-section CS2 corresponds to the cross-section CS1 shown in FIG. 1, is a plane extending in the up-down direction and the right-left direction, and extends in the diameter direction of the main surfaces 101c and 101d. Because the cross-section CS2 shown in FIG. 4 is extremely thin, the cross-section CS2 surrounded by the chain line appears as a substantially thick straight line in a manner similar to that for the cross-section CS1 shown in FIG. 1.

Such a disk-shaped glass blank 107a is preferably manufactured through appropriate forming processing.

Specifically, the disk-shaped glass blank 107a may be manufactured by cutting out a piece of round columnar glass from a prismatic glass mass formed of highly refractive glass and slicing the round columnar glass into a disk shape, for example. Also, the disk-shaped glass blank 107a may be manufactured by cutting a large glass plate formed using a float method or a downdraw method to a predetermined size, for example. Also, the disk-shaped glass blank 107a may be manufactured by press-molding molten glass, using a pair of molds, for example.

Here, chamfering need not be performed on the outer edge portions 104c and 104d forming outer edges of the main surfaces 101c and 101d of the disk-shaped glass blank 107a. That is, the main surfaces 101c and 101d of the disk-shaped glass blank 107a and the outer circumferential edge surface 102b intersect respectively at the outer edge portions 104c and 104d. In other words, the outer edge portions 104c and 104d are respectively substantially linear boundary portions between the main surfaces 101c and 101d of the disk-shaped glass blank 107a and the outer circumferential edge surface 102b, and each form a ridge. In this embodiment, the main surfaces 101c and 101d and the outer circumferential edge surface 102b intersect at substantially a right angle, when viewed from a side (see FIG. 5).

Note that a configuration may be adopted in which the main surfaces 101c and 101d are curved or the outer circumferential edge surface 102b is curved in the up-down direction, when viewed from a side, for example, and thus the main surfaces 101c and 101d and the outer circumferential edge surface 102b intersect at a right angle.

Refer to FIG. 3 again.

Chamfering is performed on the disk-shaped glass blank 107a (step S2). In the chamfering process (step S2), the outer edge portions 104c and 104d of the two main surfaces 101c and 101d of the disk-shaped glass blank 107a are chamfered.

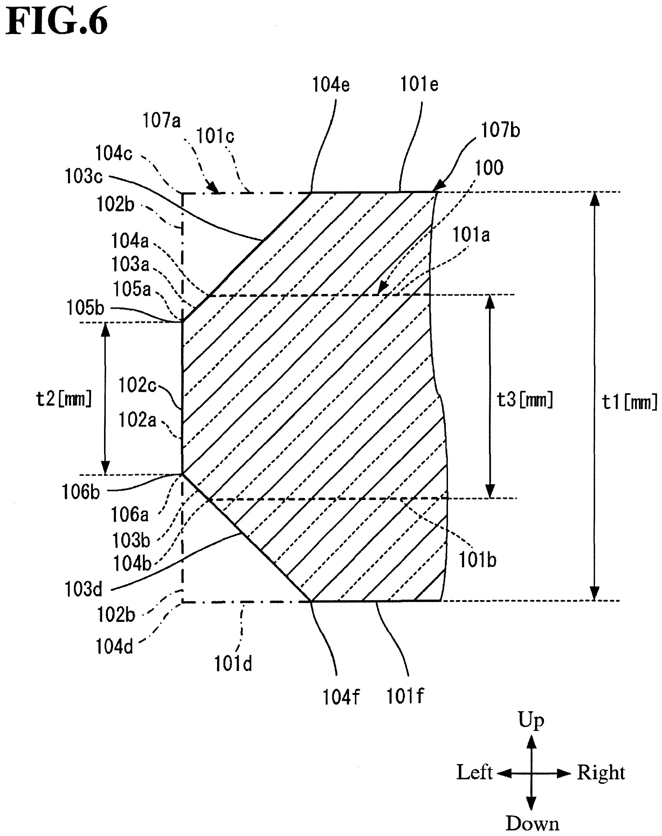

The outer edge portions 104c and 104d, which are the boundaries between the main surfaces 101c and 101d of the disk-shaped glass blank 107a and the outer circumferential edge surface 102b, are removed as a result of the chamfering process (step S2) being performed. As shown in FIG. 6 showing an enlarged cross-sectional view thereof, chamfering surfaces 103c and 103d that connect main surfaces 101e and 101f of a disk-shaped glass blank 107b and an outer circumferential edge surface 102c are formed on the disk-shaped glass blank 107b.

Specifically, the upper chamfering surface 103c is an annular surface that is inclined between an outer edge portion 104e of the upper main surface 101e and an upper end portion 105b of the outer circumferential edge surface 102c and that connects the outer edge portion 104e and the upper end portion 105b. The lower chamfering surface 103d is an annular surface that is inclined between an outer edge portion 104f of the lower main surface 101d and a lower end portion 106b of the outer circumferential edge surface 102c and that connects the outer edge portion 104f and the lower end portion 106b.

As shown in FIG. 6, in this embodiment, the chamfering surfaces 103c and 103d forming straight lines when viewed from a side are formed on the disk-shaped glass blank 107b.

Such a chamfering process (step S2) is performed through mechanical processing such as grinding using a grindstone, for example. A grinding surface of the grindstone is preferably set to have an inclination angle of 30 to 60 degrees, and more preferably 45 degrees, with respect to each of the two main surfaces 101c and 101d. Accordingly, angles formed between the main surfaces 101e and 101f and the chamfering surfaces 103c and 103d when viewed from a side, and angles formed between the outer circumferential edge surface 102c and the chamfering surfaces 103c and 103d when viewed from a side are formed to be an obtuse angle of 120 to 150 degrees, and more preferably an obtuse angle of 135 degrees.

Here, FIG. 6 is an enlarged diagram showing a cross-section of the disk-shaped glass blank 107b on which the chamfering process (step S2) has been performed, that is, a cross-section of the chamfered disk-shaped glass blank 107b in the vicinity of the left end thereof when viewed from a front side. Although the position and the range of the cross-section in the disk-shaped glass blank 107b here are not shown, similarly to FIGS. 2 and 5, the cross-section is a plane that extends in the up-down direction and the right-left direction, and is a cross-section that extends in the diameter direction of the main surfaces 101e and 101f.

In FIG. 6, the enlarged cross-section of the disk-shaped glass blank 107b is indicated by a solid line. Also, in FIG. 6, for comparison, an enlarged cross-sectional view (corresponding to the enlarged cross-sectional view shown in FIG. 5) of the disk-shaped glass blank 107a that was prepared in step S1 and that has not undergone chamfering is indicated by a chain line. Also, in FIG. 6, for comparison, the enlarged cross-sectional view (corresponding to the enlarged cross-sectional view shown in FIG. 2) of the disk-shaped glass substrate 100 manufactured as an intermediate is indicated by a dotted line.

As described above, the enlarged views of the disk-shaped glass blanks 107a and 107b and the disk-shaped glass substrate 100 shown in FIG. 6 indicate the cross-sections thereof when viewing, from a front side, substantially the same position and range of the disk-shaped glass blanks 107a and 107b, and the disk-shaped glass substrate 100 overall. That is, FIG. 6 is a diagram showing enlarged cross-sections in a case where the disk-shaped glass blanks 107a and 107b and the disk-shaped glass substrate 100 are disposed such that planes passing through the centers in the up-down direction of the disk-shaped glass blanks 107a and 107b and the disk-shaped glass substrate 100 overlap each other, and the centers of the main surfaces 101a to 101f when viewed in the up-down direction coincide with each other, and the corresponding portions of the disk-shaped glass blanks 107a and 107b and the disk-shaped glass substrate 100 are viewed from a front side.

As can be seen from FIG. 6, the diameters of the main surfaces 101e and 101f of the disk-shaped glass blank 107b and the length of the outer circumferential edge surface 102c in the up-down direction are respectively shorter than the diameters of the main surfaces 101c and 101d of the disk-shaped glass blank 107a prepared in step S1 and the length of the outer circumferential edge surface 102b in the up-down direction as a result of the chamfering process (step S2).

Also, as shown in FIG. 6, the outer circumferential edge surface 102c of the disk-shaped glass blank 107b and the upper end portion 105b and the lower end portion 106b thereof respectively substantially coincide with the outer circumferential edge surface 102a of the disk-shaped glass substrate 100, which is an intermediate, and the upper end portion 105a and the lower end portion 106a thereof. As shown in FIG. 6, portions of the upper and lower chamfering surfaces 103c and 103d of the disk-shaped glass blank 107b respectively substantially coincide with the upper and lower chamfering surfaces 103a and 103b of the disk-shaped glass substrate 100, which is an intermediate.

Also, referring to FIG. 6, when the substrate thickness of the chamfered disk-shaped glass blank 107b, excluding the outer circumferential edge surface 102c and the chamfering surfaces 103c and 103d, is t1 [mm] and the substrate thickness of the chamfered disk-shaped glass blank 107b at the outer circumferential edge surface 102c is t2 [mm], the following equation (1) is satisfied.

$$t1 \times 0.15 < t2 < t1 \times 0.4 \quad \text{Equation (1)}$$

Note that the chamfering process (step S2) is not limited to mechanical processing, and may be performed through chemical processing such as etching. The chamfering surfaces 103c and 103d forming curved lines when viewed from a side may be formed.

Refer to FIG. 3 again.

Grinding is performed on the two main surfaces 101e and 101f of the chamfered disk-shaped glass blank 107b (step S3). The grinding process (step S3) is performed mainly in order to adjust the thickness of the disk-shaped glass blank 107b, and adjust the flatness of the two main surfaces 101e and 101f of the disk-shaped glass blank 107b and parallelism therebetween.

The machining allowance of the grinding process (step S3) is about 120 [μm] to 400 [μm], for example. Here, the "machining allowance" refers to the length of a portion in the up-down direction to be removed in this process.

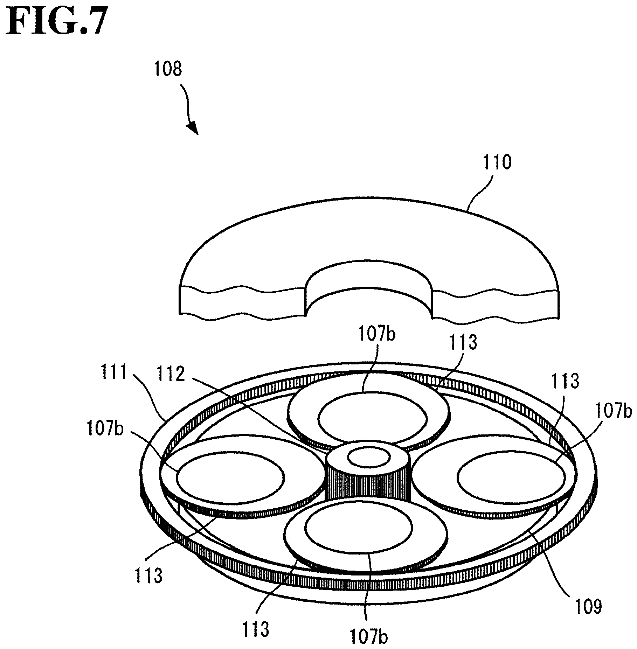

In the grinding process (step S3), the two main surfaces 101e and 101f of the chamfered disk-shaped glass blank 107b are ground using a double-side grinding apparatus 108 shown in FIG. 7 simultaneously.

FIG. 7 shows a configuration of the double-side grinding apparatus 108. A method for grinding the main surfaces 101e and 101f of the disk-shaped glass blank 107b in the grinding process (step S3) will be described with reference to FIG. 7.

As shown in FIG. 7, the double-side grinding apparatus 108 has a lower surface plate 109, an upper surface plate 110, an internal gear 111, a sun gear 112, and substantially disk-shaped carriers 113 provided with holding holes.

A diamond sheet (not shown) is planarly attached to an upper surface of the lower surface plate 109 and a lower surface of the upper surface plate 110. The surface of the diamond sheet serves as a grinding surface. Fixed abrasive particles have a particle size of about 10 [μm], for example.

The internal gear 111 is a substantially hollow annular member provided with a tooth profile on the inner surface thereof. The sun gear 112 is a substantially round columnar member disposed at the center of the internal gear 111, and is provided with a tooth profile on the outer circumferential surface thereof.

The carriers 113 are holding members for holding the disk-shaped glass blanks 107b in holding holes. Specifically, as shown in FIG. 7, the disk-shaped glass blanks 107b are held by the carriers 113 as a result of the outer circumferential edge surfaces 102c thereof being housed in the holding holes of the carriers 113 to be in substantially tight contact with wall surfaces forming the holding holes.

Also, the outer circumferential surfaces of the carriers 113 are provided with teeth. The carriers 113 for holding the disk-shaped glass blanks 107b are disposed such that the teeth of the carriers 113 engage with the teeth of the internal gear 111 and the sun gear 112 therebetween. FIG. 7 shows an example in which four carriers 113 are disposed between the internal gear 111 and the sun gear 112.

Note that the number of carriers 113 disposed in the double-side grinding apparatus 108 is not limited to four, and may be 1, 2, 3, 5 or more. Also, the number of disk-shaped glass blanks 107b held by one carrier 113 is not limited to 1, and may be two or more.

The disk-shaped glass blanks 107b held by the carriers 113 are sandwiched between the lower surface plate 109 and the upper surface plate 110 at a predetermined pressure. Then, either one or both of the upper surface plate 110 and the lower surface plate 109 perform a moving operation. Accordingly, the disk-shaped glass blanks 107b and the surface plates 109 and 110 move relative to each other, and the two main surfaces 101e and 101f of each disk-shaped glass blank 107b are ground simultaneously by fixed abrasive particles included in the above-described diamond sheet.

Note that loose abrasive particles may be adopted instead of fixed abrasive particles. In this case, the disk-shaped glass blanks 107b can be ground using the same method as in the case of using the above-described fixed abrasive particles using grinding pads instead of the above-described diamond sheet and a grinding slurry containing loose abrasive particles instead of fixed abrasive particles.

Refer to FIG. 3 again.

Polishing is performed on two main surfaces of the disk-shaped glass blank (not shown) on which the grinding process (step S3) has been performed, that is, the ground disk-shaped glass blank (step S4). The polishing process (step S4) is performed in order to remove blemishes and warping that occur in the grinding, and mirror-polish the glass blank.

The machining allowance of the polishing process (step S4) is about 10 [μm] to 150 [μm], for example, and preferably 20 [μm] to 150 [μm]. The polishing process (step S4) is desired to be performed in multiple stages as will be described later as well, and the disk-shaped glass substrate 100 described above with reference to FIGS. 1 and 2 is preferably produced thereby, for example.

In the polishing process (step S4), polishing is performed on two main surfaces of the ground disk-shaped glass blank, using the double-side polishing apparatus, simultaneously, for example.

The double-side polishing apparatus may have a configuration that is substantially the same as that of the above-described double-side grinding apparatus 108, except that polishing pads are attached to the upper surface of the lower surface plate 109 and the lower surface of the upper surface plate 110, instead of the diamond sheet. The polishing pads are flat plate members having an annular shape overall, and are resin polishers, for example. Also, a polishing slurry containing loose abrasive particles is used in the polishing process (step S4).

Although the double-side polishing apparatus is not shown, for simplification, in the description relating to the following polishing process (step S4), constituent elements of the double-side polishing apparatus utilized in this process (step S4) are given reference numerals of the corresponding constituent elements of the double-side grinding apparatus 108 shown in FIG. 7.

The carriers 113 hold the ground disk-shaped glass blanks in a manner similar to that of the above-described double-side grinding apparatus 108. The carriers 113 for holding the ground disk-shaped glass blanks are disposed such that the teeth of the carriers 113 engage with the teeth of the internal gear 111 and the sun gear 112 therebetween. The disk-shaped glass blanks held by the carriers 113 are sandwiched at a predetermined pressure between the lower surface plate 109 and the upper surface plate 110 provided with the polishing pads. Then, either one or both of the upper surface plate 110 and the lower surface plate 109 performs a moving operation while the polishing slurry is supplied. Accordingly, the ground disk-shaped glass blank and the surface plates 109 and 110 move relative to each other, and the two main surfaces of each disk-shaped glass blank are polished by loose abrasive particles included in the polishing slurry simultaneously.

As shown in FIG. 3, the polishing process (step S4) according to this embodiment includes a first polishing process (step S41) and a second polishing process (step S42).

The first polishing process (step S41) is performed mainly in order to remove blemishes and warping remaining on the ground main surfaces, or adjust minute unevenness (microwaviness, roughness, and the like) of the ground main surfaces. In the first polishing process (step S41), as described above, polishing is performed using the double-side polishing apparatus on the two main surfaces of the disk-shaped glass blank on which the grinding process (step S3) has been performed. The machining allowance of the first polishing process (step S41) is about 10 [μm] to 100 [μm], for example.

In the first polishing process (step S41), a polishing slurry containing, as loose abrasive particles, cerium oxide abrasive particles, zirconia abrasive particles, or the like having a particle diameter of about 1 [μm] to 2 [μm] is used, for example.

Note that, in the first polishing process (step S41), it is preferable to perform polishing in multiple stages with at least one of the polishing pads and the polishing slurry being changed. That is, in this case, a combination of the polishing slurry and the polishing pads applied to the double-side polishing apparatus is preferably changed in the stages of the first polishing process (step S41). The parallelism of the disk-shaped glass blank can be adjusted in a range of 0.05 [μm] to 0.95 [μm] by performing the first polishing process (step S41) in multiple stages in this manner, and as a result, a disk-shaped glass substrate 100 having high surface quality and a highly precise substrate thickness can be obtained.

The second polishing process (step S42) is performed mainly in order to mirror-polish the main surfaces and reduce roughness thereof. In the second polishing process (step S42), as described above, polishing is performed using the double-side polishing apparatus on the two main surfaces of the disk-shaped glass blank on which the first polishing process (step S41) has been performed. The machining allowance of the second polishing process (step S42) is about 1 [μm], for example.

The second polishing process (step S42) differs from the first polishing process (step S41) in the type and particle size of loose abrasive particles included in the polishing slurry, and the hardness of the resin polishers. In the second polishing process (step S42) according to this embodiment, microparticles having a particle diameter of about 10 [nm (nanometers)] to 50 [nm], such as colloidal silica suspended in a slurry, are used as loose abrasive particles, for example.

Note that it is sufficient that the second polishing process (step S42) differs from the first polishing process (step S41) in at least one of the type and particle size of loose abrasive particles included in the polishing slurry, and the polishing pads. That is, it is preferable that a combination of the polishing slurry and the hardness of the resin polishers applied to the double-side polishing apparatus differs between the first polishing process (step S41) and the second polishing process (step S42).

The roughness (root mean square roughness) Rq of the main surfaces can be set to 0.4 [nm] by carrying out the second polishing process (step S42). As a result, the disk-shaped glass substrate 100 having high surface quality can be produced, and thus a thin glass substrate having high surface quality can be produced by being cut out from the disk-shaped glass substrate 100.

The disk-shaped glass substrate 100 having a highly precise substrate thickness as that shown in FIG. 1 can be produced by performing grinding processing (step S3) and polishing processing (Step S4) on the two main surfaces 101e and 101f of the disk-shaped glass blank 107b. Note that the disk-shaped glass substrate 100 to be produced has a substrate thickness t3 of 50 [μm] to 500 [μm], preferably 100 [μm] to 400 [μm], and more preferably 100 [μm] to 350 [μm] in portions excluding the outer circumferential edge surface 102a and the chamfering surfaces 103a and 103b.

Also, the disk-shaped glass substrate 100 to be produced may have a large diameter of 70 to 210 [mm]. Also, the disk-shaped glass substrate 100 to be produced has high surface quality whereby the parallelism between the two main surfaces 101a and 101b thereof is less than 1.0 [μm], and the parallelism therebetween is preferably 0.95 [μm] or less, and more preferably 0.5 [μm] or less. The parallelism between the two main surfaces 101a and 101b of the disk-shaped glass substrate 100 may be 0.05 [μm] or more.

In the grinding process (step S3) and the polishing process (step S4), the main surfaces of the disk-shaped glass blank are ground and polished with a machining allowance in a range in which at least portions of the chamfering surfaces 103c and 103d formed in the chamfering process (step S2) remain after the processes of step S3 and S4 are performed. Accordingly, the chamfering surfaces 103a and 103b can be reliably provided on the disk-shaped glass substrate 100 to be produced through polishing (step S4).

Also, when the substrate thickness of the chamfered disk-shaped glass blank 107b at the outer circumferential edge surface 102c is t2 [mm] and the substrate thickness of the disk-shaped glass substrate 100 produced through polishing (step S4), excluding the outer circumferential edge surface 102a and the chamfering surfaces 103a and 103b, is t3 [mm] (see FIG. 6), the following equation (2) is satisfied.

$$t3 \times 0.5 < t2 \qquad \text{Equation (2)}$$

Refer to FIG. 3 again.

After the polishing processing (step S4), the disk-shaped glass substrate 100 is cleaned using a neutral detergent, pure water, IPA (isopropyl alcohol), or the like. Accordingly, the disk-shaped glass substrate 100 shown in FIG. 1 is complete. Note that the shape and size of the disk-shaped glass substrate 100, such as the substrate thickness of the disk-shaped glass substrate 100, usually do not substantially change before and after the cleaning processing (step S5).

The method for manufacturing the disk-shaped glass substrate 100 according to this embodiment includes the chamfering process (step S2). Damage to the disk-shaped glass blank due to cracks or the like can be suppressed during the subsequent processing processes (steps S3 to S5) or before and after each of the processing processes (steps S3 to S5).

Also, the grinding process (step S3) and the polishing process (step S4) are performed after the chamfering process (step S2) and objects to be ground and polished have a disk shape, and thus no corner portions are provided. Accordingly, a frictional force applied to the main surfaces 101e and 101f of the disk-shaped glass blank 107b is likely to be uniform in steps S3 and S4. As a result, the disk-shaped glass blank 107b can be processed to have high surface quality and be thin with high accuracy.

Also, it is possible to produce the disk-shaped glass substrate 100 having high surface quality and a highly precise substrate thickness as described above with reference to FIGS. 1 and 2. That is, the disk-shaped glass substrate 100 has a uniform substrate thickness and uniform and high surface quality, and thus a thin glass substrate having high surface quality and a highly precise substrate thickness, and a desired shape or size can be cut out.

Furthermore, the chamfering surfaces 103a and 103b are also formed on the produced disk-shaped glass substrate 100 due to the chamfering process (step S2) being included. Accordingly, the disk-shaped glass substrate 100 is unlikely to be damaged when a thin glass substrate is cut out from the disk-shaped glass substrate 100, and it is possible to cut out thin glass substrates at a higher yield than in a case where no chamfering surfaces 103a and 103b are provided.

Thus, it is possible to stably mass produce thin glass substrates having high surface quality, a highly precise substrate thickness, and a desired shape.

Also, as described above, the grinding process (step S3) and the polishing process (step S4) are performed after the chamfering process (step S2) and objects to be ground and polished have a disk shape, and thus no corner portions are provided. Thus, it is possible to stably manufacture, at a high yield, the disk-shaped glass substrates 100 having a large diameter of 70 to 210 mm, and having high surface quality and a highly precise substrate thickness. Normally, more thin glass substrates can be cut out from a large disk-shaped glass substrate 100 than from a small disk-shaped glass substrate 100. Thus, stable mass production of thin glass substrates having high surface quality and a highly precise substrate thickness can be facilitated by cutting out thin glass substrates from a large disk-shaped glass substrate 100.

(Method for manufacturing thin glass substrate 114)

Hereinafter, a method for manufacturing a thin glass substrate 114 will be described.

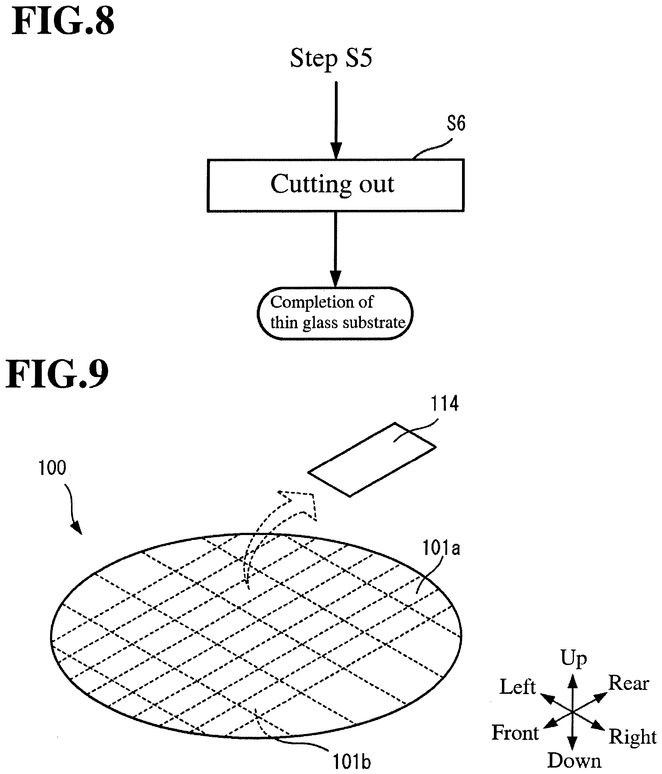

The method for manufacturing the thin glass substrate 114 according to this embodiment is a method for manufacturing a plurality of thin glass substrates 114 from the disk-shaped glass substrate 100, which is an intermediate, and includes processes shown in the flowchart shown in FIG. 8, for example.

As shown in FIG. 8, with the method for manufacturing the thin glass substrate 114 according to this embodiment, after steps S1 to S5 described above with reference to FIG. 3 have been carried out, a plurality of rectangular thin glass substrates 114 are cut out from the disk-shaped glass substrate 100 (step S6). In other words, the cut-out processing (step S6) is performed on the disk-shaped glass substrate 100 manufactured using the method for manufacturing the disk-shaped glass substrate 100.

Here, for simplification, the same processes as those of steps S1 to S5 in the method for manufacturing the disk-shaped glass substrate 100 are not shown in FIG. 8.

Specifically, as shown in FIG. 9, in the cut-out processing (step S6), the disk-shaped glass substrate 100 is cut along dotted straight lines shown in FIG. 9. Accordingly, a plurality of rectangular thin glass substrates 114 as shown in an enlarged manner in FIG. 9 are cut out from the disk-shaped glass substrate 100.

According to the method for manufacturing the thin glass substrate 114, as described above, the disk-shaped glass substrate 100 having a uniform substrate thickness and uniform and high surface quality can be produced through the processes of steps S1 to S5. With such a disk-shaped glass substrate 100, a plurality of thin glass substrates 114 having high surface quality and a highly precise substrate thickness can be obtained regardless of portions from which the thin glass substrates 114 are cut out. Also, even in the case of a rectangular thin glass substrate 114 having corner portions, for example, the thin glass substrate 114 having high surface quality and a highly precise substrate thickness can be obtained.

Also, as described above, the disk-shaped glass substrate 100 is unlikely to be damaged when the thin glass substrates 114 are cut out from the disk-shaped glass substrate 100 due to this method including the chamfering process (step S2). Thus, even rectangular thin glass substrates 114 having corner portions as described as an example here can be obtained at a higher yield than in a case where no chamfering surfaces 103a and 103b are provided.

Thus, it is possible to stably mass produce thin glass substrates 114 having high surface quality, a highly precise substrate thickness, and corner portions.

Note that, although an example in which a plurality of rectangular thin glass substrates 114 are cut out in the cut-out processing (step S6) has been described, the number of thin glass substrates 114 to be cut out from the disk-shaped glass substrate 100 may be one. Also, in the cut-out processing (step S6), the shapes and sizes of one or more thin glass substrates 114 that are cut out from the disk-shaped glass substrate 100 may be changed as appropriate, and the thin glass substrates 114 may have a shape having no corner portions, for example. Accordingly, it is possible to stably mass produce thin glass substrates 114 having high surface quality, a highly precise substrate thickness, and a desired shape.

Note that a single thin glass substrate 114 manufactured using the method for manufacturing the thin glass substrate 114 described here may be utilized as a light-guiding plate. In this case, the method for manufacturing the thin glass substrate 114 described here is preferably adopted as a method for manufacturing a light-guiding plate. Accordingly, it is possible to stably mass produce light-guiding plates having high surface quality, a highly precise substrate thickness, and a desired shape.

(Method for manufacturing light-guiding plate)

Hereinafter, the method for manufacturing a light-guiding plate 115 will be described.

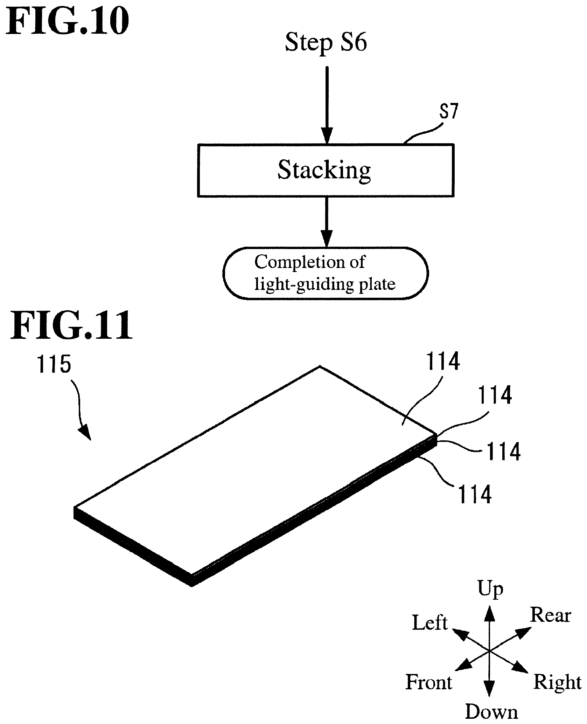

The method for manufacturing the light-guiding plate 115 according to this embodiment is a method for manufacturing the light-guiding plate 115 by combining a plurality of thin glass substrates 114, and includes processes shown in the flowchart shown in FIG. 10, for example.

As shown in FIG. 10, in the method for manufacturing the light-guiding plate 115 according to this embodiment, after the cut-out processing (step S6) described with reference to FIG. 8 has been carried out, the cutout thin glass substrates 114 are stacked on each other (step S7). In other words, the stacking process (step S7) is performed on the thin glass substrates 114 manufactured using the method for manufacturing the thin glass substrate 114.

Here, for simplification, the same processes as those of steps S1 to S6 in the method for manufacturing the thin glass substrate 114 are not shown in FIG. 10. That is, steps S1 to S5 in the method for manufacturing the light-guiding plate 115 may respectively be the same as steps S1 to S5 in the method for manufacturing the disk-shaped glass substrate 100.

Specifically, in the stacking process (step S7), the thin glass substrates 114 are stacked on each other in the up-down direction with adjacent thin glass substrates 114 being fixed to each other, and thus the light-guiding plate 115 as shown in FIG. 11 is produced.

Note that, although an example in which four thin glass substrates 114 are stacked on each other is shown in FIG. 11, the number of thin glass substrates 114 to be stacked in the stacking process (step S7) may be determined as appropriate.

According to the method for manufacturing the light-guiding plate 115, the light-guiding plate 115 can be produced by cutting out a plurality of thin glass substrates 114 having high surface quality and a highly precise substrate thickness and stacking the cutout thin glass substrates 114 on each other. As described above, it is possible to stably mass produce thin glass substrates 114 having high surface quality, a highly precise substrate thickness, and corner portions. Thus, it is possible to stably mass produce light-guiding plates 115 having high surface quality, a highly precise substrate thickness, and corner portions.

Note that, as described above, thin glass substrates 114 to be cut out from the disk-shaped glass substrate 100 in the cut-out processing (step S6) may have a desired shape and size. Accordingly, it is possible to stably mass produce light-guiding plates 115 having high surface quality, a highly precise substrate thickness, and a desired shape.

Industrial Applicability

The present invention can be utilized for mass production of glass substrates with high surface quality and a small substrate thickness, such as glass substrates to be applied to display apparatuses such as head-mounted displays.

List of Reference Numerals

100 Disk-shaped glass substrate
101a to 101f Main surfaces
102a to 102c Outer circumferential edge surface
103a to 103d Chamfering surface
CS1, CS2 Cross-section
104a to 104f Outer edge portion
105a and 105b Upper end portion
106a and 106b Lower end portion
107a and 107b Disk-shaped glass blank
108 Double-side grinding apparatus
109 Lower surface plate
110 Upper surface plate
111 Internal gear
112 Sun gear
113 Carrier
114 Thin glass substrate
115 Light-guiding plate

**Claims**

1. A method for manufacturing a disk-shaped glass substrate (100), the disk-shaped glass substrate (100) being for cutting out one or more glass substrates (114), the method comprising:

   preparing (S1) a disk-shaped glass blank (107a) having a refractive index of 1.60 or more, the disk-shaped glass blank (107a) having a first substrate thickness (t1), the disk-shaped glass blank (107a) being a glass blank having two first circular main surfaces (101c, 101d) and a first outer circumferential edge surface (102b) which intersect at a right angle respectively at outer edge portions (104c, 104d);
   chamfering (S2) the outer edge portions (104c, 104d) of the two first circular main surfaces (101c, 101d) of the disk-shaped glass blank (107a) to produce a chamfered disk-shaped glass blank (107b) having two second circular main surfaces (101e, 101f) and first chamfering surfaces (103c, 103d) that connect the two second circular main surfaces (101e, 101f) and a second outer circumferential edge surface (102c) having a second substrate thickness (t2), wherein the chamfered disk-shaped glass blank (107b), excluding the second outer circumferential edge surface (102c) and the first chamfering surfaces (103c, 103d), has the first substrate thickness (t1), wherein the following equation $t1 \times 0.15 < t2 < t1 \times 0.4$ is satisfied, the first chamfering surfaces (103c, 103d), forming straight lines when viewed from a side, being formed on the disk-shaped glass blank (107a); grinding (S3) the two second circular main surfaces (101e, 101f) of the chamfered disk-shaped glass blank (107b), using a double-side grinding apparatus (108) to produce a ground disk-shaped glass blank having two third circular main surfaces; and

polishing (S4) the two third circular main surfaces of the ground disk-shaped glass blank, using a double-side polishing apparatus to produce the disk-shaped glass substrate (100), wherein the disk-shaped glass substrate (100) produced through the polishing has a third substrate thickness (t3), excluding the second outer circumferential edge surface (102a) and the second chamfering surfaces (103a, 103b) of the disk-shaped glass substrate (100), and the following equation $t3 \times 0.5 < t2$ is satisfied, and wherein, in the polishing (S4), the disk-shaped glass substrate (100) having a root mean square roughness Rq of 0.4 nm or less is produced by polishing the two third circular main surfaces of the ground disk-shaped glass blank.

2. The method for manufacturing a disk-shaped glass substrate (100) according to claim 1, wherein, in the polishing (S4), the disk-shaped glass substrate (100) having the third substrate thickness (t3) of 100 to 350 $\mu$m is produced by polishing the two third circular main surfaces of the ground disk-shaped glass blank.

3. The method for manufacturing a disk-shaped glass substrate (100) according to claim 1 or 2, wherein, in the polishing (S4), the disk-shaped glass substrate (100) having a diameter of 70 to 210 mm is produced by polishing the two third circular main surfaces of the ground disk-shaped glass blank.

4. The method for manufacturing a disk-shaped glass substrate (100) according to any one of claims 1 to 3, wherein, in the polishing (S4), the disk-shaped glass substrate (100) having a parallelism of less than 1.0 $\mu$m is produced by polishing the two third circular main surfaces of the ground disk-shaped glass blank.

5. The method for manufacturing a disk-shaped glass substrate (100) according to claim 4, wherein, in the polishing (S4), the disk-shaped glass substrate (100) having a parallelism of 0.05 to 0.95

$\mu$m is produced by polishing the two third circular main surfaces of the ground disk-shaped glass blank.

6. The method for manufacturing a disk-shaped glass substrate (100) according to any one of claims 1 to 5,

wherein, in the chamfering (S2), the first chamfering surfaces (103c, 103d) are formed by chamfering the outer edge portions (104c, 104d) through mechanical processing or chemical processing, and
in the grinding (S3) and the polishing (S4), the two second circular main surfaces (101e, 101f) of the chamfered disk-shaped glass blank (107b) are ground and polished with a machining allowance in a range in which at least portions of the second chamfering surfaces (103c, 103d) remain.

7. The method for manufacturing a disk-shaped glass substrate (100) according to any one of claims 1 to 6, wherein, in the polishing (S4), the disk-shaped glass substrate (100) that has the third substrate thickness (t3) of 100 to 350 $\mu$m and has a diameter of 70 to 210 mm and in which a parallelism between two fourth circular main surfaces (101a, 101b) of the disk-shaped glass substrate (100) is less than 1.0 $\mu$m is produced by polishing, in multiple stages, the two third circular main surfaces of the ground disk-shaped glass blank such that $20 \ \mu m \leq D < 150 \ \mu m$ is satisfied, where a machining allowance of the polishing is D.

8. The method for manufacturing a disk-shaped glass substrate (100) according to any one of claims 1 to 7,

wherein the polishing (S4) includes
performing first polishing (S41) for polishing the two third circular main surfaces of the ground disk-shaped glass blank, using the double-side polishing apparatus, and
performing second polishing (S42) for polishing two circular main surfaces of the disk-shaped glass blank on which the first polishing (S41) has been performed, using the double-side polishing apparatus, and
a combination of polishing pads and a polishing slurry that are applied to the double-side polishing apparatus differs between the first polishing (S41) and the second polishing (S42).

9. A method for manufacturing a glass substrate (114), comprising:
cutting out (S6) a plurality of glass substrates (114) from the disk-shaped glass substrate (100) manufactured by the method according to any one of claims 1 to 8.

10. The method for manufacturing a glass substrate (114) according to claim 9, wherein, in the cutting out (S6) the plurality of glass substrates, rectangular glass substrates (114) are cut out.

11. The method for manufacturing a glass substrate (114) according to claim 9 or 10, wherein, in the cutting out (S6) the plurality of glass substrates, glass substrates (114) that each have a substrate thickness of 100 to 350 $\mu$m and in which a parallelism between two main surfaces of each glass substrate (114) is less than 1.0 $\mu$m are cut out.

12. A method for manufacturing a light-guiding plate, comprising: cutting out (S6) a plurality of glass substrates (114) from the disk-shaped glass substrate (100) manufactured by the method according to any one of claims 1 to 8; and stacking (S7) the cutout glass substrates (114) on each other to produce a light-guiding plate (115).

**Patentansprüche**

1. Verfahren zur Herstellung eines scheibenförmigen Glassubstrats (100), wobei das scheibenförmige Glassubstrat (100) zum Ausschneiden eines oder mehrerer Glassubstrate (114) dient, wobei das Verfahren umfasst:

> Herstellen (S1) eines scheibenförmigen Glasrohlings (107a) mit einem Brechungsindex von 1,60 oder mehr, wobei der scheibenförmige Glasrohling (107a) eine erste Substratdicke (t1) aufweist, wobei der scheibenförmige Glasrohling (107a) ein Glasrohling mit zwei ersten kreisförmigen Hauptflächen (101c, 101d) und einer ersten äußeren Umfangskantenfläche (102b) ist, die sich in einem rechten Winkel jeweils an äußeren Kantenabschnitten (104c, 104d) schneiden;
> Anfasen (S2) der äußeren Kantenabschnitte (104c, 104d) der beiden ersten kreisförmigen Hauptflächen (101c, 101d) des scheibenförmigen Glasrohlings (107a), um einen angefasten scheibenförmigen Glasrohling (107b) mit zwei zweiten kreisförmigen Hauptflächen (101e, 101f) und ersten Anfasungsflächen (103c, 103d) zu erzeugen, die die beiden zweiten kreisförmigen Hauptflächen (101e, 101f) verbinden, und einer zweiten äußeren Umfangskantenfläche (102c), die eine zweite Substratdicke (t2) aufweist, wobei der angefaste scheibenförmige Glasrohling (107b) mit Ausnahme der zweiten äußeren Umfangskantenfläche (102c) und der ersten Anfasungsflächen (103c, 103d) die erste

> Substratdicke (t1) aufweist, wobei gilt: t1 $\times$ 0,15 < t2 < t1 $\times$ 0,4,
> wobei die ersten Anfasungsflächen (103c, 103d), die von der Seite gesehen gerade Linien bilden, an dem scheibenförmigen Glasrohling (107a) ausgebildet werden;
> Schleifen (S3) der beiden zweiten kreisförmigen Hauptflächen (101e, 101f) des angefasten scheibenförmigen Glasrohlings (107b) unter Verwendung einer doppelseitigen Schleifvorrichtung (108), um einen geschliffenen scheibenförmigen Glasrohling mit zwei dritten kreisförmigen Hauptflächen zu erzeugen; und
> Polieren (S4) der beiden dritten kreisförmigen Hauptflächen des geschliffenen scheibenförmigen Glasrohlings unter Verwendung einer doppelseitigen Poliervorrichtung, um das scheibenförmige Glassubstrat (100) zu erzeugen,
> wobei das durch das Polieren erzeugte scheibenförmige Glassubstrat (100) eine dritte Substratdicke (t3) aufweist, mit Ausnahme der zweiten äußeren Umfangskantenfläche (102a) und der zweiten Anfasungsflächen (103a, 103b) des scheibenförmigen Glassubstrats (100), wobei gilt: t3 x 0,5 < t2, und
> wobei beim Polieren (S4) das scheibenförmige Glassubstrat (100) mit einer mittleren quadratischen Rauheit Rq von 0,4 nm oder weniger durch Polieren der beiden dritten kreisförmigen Hauptflächen des geschliffenen scheibenförmigen Glasrohlings erzeugt wird.

2. Verfahren zur Herstellung eines scheibenförmigen Glassubstrats (100) nach Anspruch 1, wobei beim Polieren (S4) das scheibenförmige Glassubstrat (100) mit der dritten Substratdicke (t3) von 100 bis 350 $\mu$m durch Polieren der beiden dritten kreisförmigen Hauptflächen des geschliffenen scheibenförmigen Glasrohlings erzeugt wird.

3. Verfahren zur Herstellung eines scheibenförmigen Glassubstrats (100) nach Anspruch 1 oder 2, wobei beim Polieren (S4) das scheibenförmige Glassubstrat (100) mit einem Durchmesser von 70 bis 210 mm durch Polieren der beiden dritten kreisförmigen Hauptflächen des geschliffenen scheibenförmigen Glasrohlings erzeugt wird.

4. Verfahren zur Herstellung eines scheibenförmigen Glassubstrats (100) nach einem der Ansprüche 1 bis 3, wobei beim Polieren (S4) das scheibenförmige Glassubstrat (100) mit einer Parallelität von weniger als 1,0 $\mu$m durch Polieren der beiden dritten kreisförmigen Hauptflächen des geschliffenen scheibenförmigen Glasrohlings erzeugt wird.

5. Verfahren zur Herstellung eines scheibenförmigen Glassubstrats (100) nach Anspruch 4,
wobei beim Polieren (S4) das scheibenförmige Glassubstrat (100) mit einer Parallelität von 0,05 bis 0,95 μm durch Polieren der beiden dritten kreisförmigen Hauptflächen des geschliffenen scheibenförmigen Glasrohlings erzeugt wird.

6.  Verfahren zur Herstellung eines scheibenförmigen Glassubstrats (100) nach einem der Ansprüche 1 bis 5,

    wobei beim Anfasen (S2) die ersten Anfasungsflächen (103c, 103d) durch Anfasen der äußeren Kantenabschnitte (104c, 104d) durch mechanische Bearbeitung oder chemische Bearbeitung gebildet werden, und
    beim Schleifen (S3) und Polieren (S4) die beiden zweiten kreisförmigen Hauptflächen (101e, 101f) des angefasten scheibenförmigen Glasrohlings (107b) mit einer Bearbeitungszugabe in einem Bereich geschliffen und poliert werden, in dem zumindest Teile der zweiten Anfasungsflächen (103c, 103d) verbleiben.

7.  Verfahren zur Herstellung eines scheibenförmigen Glassubstrats (100) nach einem der Ansprüche 1 bis 6,
    wobei beim Polieren (S4) das scheibenförmige Glassubstrat (100), das eine dritte Substratdicke (t3) von 100 bis 350 μm und einen Durchmesser von 70 bis 210 mm aufweist und bei dem eine Parallelität zwischen zwei vierten kreisförmigen Hauptflächen (101a, 101b) des scheibenförmigen Glassubstrats (100) kleiner als 1,0 μm vorliegt, durch mehrstufiges Polieren der beiden dritten kreisförmigen Hauptflächen des geschliffenen scheibenförmigen Glasrohlings erzeugt wird, so dass gilt: 20 μm ≤ D < 150 μm, wobei D eine Bearbeitungszugabe für das Polieren ist.

8.  Verfahren zur Herstellung eines scheibenförmigen Glassubstrats (100) nach einem der Ansprüche 1 bis 7,
    wobei das Polieren (S4) umfasst:

    Durchführen eines ersten Poliervorgangs (S41) zum Polieren der beiden dritten kreisförmigen Hauptoberflächen des geschliffenen scheibenförmigen Glasrohlings unter Verwendung der doppelseitigen Poliervorrichtung, und
    Durchführen eines zweiten Poliervorgangs (S42) zum Polieren der beiden kreisförmigen Hauptflächen des scheibenförmigen Glasrohlings, an denen der erste Poliervorgang (S41) durchgeführt wurde, unter Verwendung der doppelseitigen Poliervorrichtung, und
    wobei eine Kombination aus Polierpads und Polieraufschlämmung, die auf die doppelseitige Poliervorrichtung aufgebracht werden, im ersten Poliervorgang (S41) und im zweiten Poliervorgang (S42) unterschiedlich ist.

9.  Verfahren zur Herstellung eines Glassubstrats (114), umfassend:
    Ausschneiden (S6) einer Vielzahl von Glassubstraten (114) aus einem scheibenförmigen Glassubstrat (100), das mit dem Verfahren nach einem der Ansprüche 1 bis 8 hergestellt wurde.

10. Verfahren zur Herstellung eines Glassubstrats (114) nach Anspruch 9,
    wobei beim Ausschneiden (S6) der Vielzahl von Glassubstraten rechteckförmige Glassubstrate (114) ausgeschnitten werden.

11. Verfahren zur Herstellung eines Glassubstrats (114) nach Anspruch 9 oder 10,
    wobei beim Ausschneiden (S6) der Vielzahl von Glassubstraten Glassubstrate (114) ausgeschnitten werden, die jeweils eine Substratdicke von 100 bis 350 μm aufweisen und bei denen eine Parallelität zwischen zwei Hauptflächen jedes Glassubstrats (114) weniger als 1,0 μm beträgt.

12. Verfahren zur Herstellung einer lichtleitenden Platte, umfassend:

    Ausschneiden (S6) einer Vielzahl von Glassubstraten (114) aus dem scheibenförmigen Glassubstrat (100), das mit dem Verfahren nach einem der Ansprüche 1 bis 8 hergestellt wurde; und
    Stapeln (S7) der ausgeschnittenen Glassubstrate (114) übereinander, um eine lichtleitende Platte (115) zu erzeugen.

**Revendications**

1.  Procédé de fabrication d'un substrat en verre en forme de disque (100), le substrat en verre en forme de disque (100) étant destiné à la découpe d'un ou de plusieurs substrats en verre (114), le procédé comprenant :

    la préparation (S1) d'une ébauche en verre en forme de disque (107a) présentant un indice de réfraction supérieur ou égal à 1,60, l'ébauche en verre en forme de disque (107a) présentant une première épaisseur de substrat (t1), l'ébauche en verre en forme de disque (107a) étant une ébauche en verre présentant deux premières surfaces principales circulaires (101c, 101d) et une première surface de bord circonférentielle extérieure (102b) qui se croisent à angle droit respectivement sur des parties de bord extérieures (104c, 104d) ;

le chanfreinage (S2) des parties de bord extérieures (104c, 104d) des deux premières surfaces principales circulaires (101c, 101d) de l'ébauche en verre en forme de disque (107a) pour produire une ébauche en verre en forme de disque chanfreinée (107b) présentant deux deuxièmes surfaces principales circulaires (101e, 101f) et des premières surfaces de chanfreinage (103c, 103d) qui relient les deux deuxièmes surfaces principales circulaires (101e, 101f) et une deuxième surface de bord circonférentielle extérieure (102c) présentant une deuxième épaisseur de substrat (t2), dans lequel l'ébauche en verre en forme de disque chanfreinée (107b), à l'exclusion de la deuxième surface de bord circonférentielle extérieure (102c) et des premières surfaces de chanfreinage (103c, 103d), présente la première épaisseur de substrat (t1), dans lequel l'équation suivante

$$t1 \times 0,15 < t2 < t1 \times 0,4$$

est satisfaite, les premières surfaces de chanfreinage (103c, 103d), formant des lignes droites lorsqu'elles sont vues depuis un côté, étant formées sur l'ébauche en verre en forme de disque (107a) ;

le meulage (S3) des deux deuxièmes surfaces principales circulaires (101e, 110f) de l'ébauche en verre en forme de disque chanfreinée (107b), en utilisant un appareil de meulage double face (108) pour produire une ébauche en verre en forme de disque meulée présentant deux troisièmes surfaces principales circulaires ; et

le polissage (S4) des deux troisièmes surfaces principales circulaires de l'ébauche en verre en forme de disque meulée en utilisant un appareil de polissage double face pour produire le substrat en verre en forme de disque (100),

dans lequel le substrat en verre en forme de disque (100) produit par le polissage présente une troisième épaisseur de substrat (t3), à l'exclusion de la deuxième surface de bord circonférentielle extérieure (102a) et des deuxièmes surfaces de chanfreinage (103a, 103b) du substrat en verre en forme de disque (100), et l'équation suivante t3 x 0,5 < t2 est satisfaite, et

dans lequel, lors du plissage (S4), le substrat en verre en forme de disque (100) présentant une rugosité quadratique moyenne Rq inférieure ou égale à 0,4 nm est produit par polissage des deux troisièmes surfaces principales circulaires de l'ébauche en verre en forme de disque meulée.

2. Procédé de fabrication d'un substrat en verre en forme de disque (100) selon la revendication 1, dans lequel, lors du polissage (S4), le substrat en verre en forme de disque (100) présentant la troisième épaisseur de substrat (t3) de 100 à 350 $\mu$m est produit par polissage des deux troisièmes surfaces principales circulaires de l'ébauche en verre en forme de disque meulée.

3. Procédé de fabrication d'un substrat en verre en forme de disque (100) selon la revendication 1 ou 2, dans lequel, lors du polissage (S4), le substrat en verre en forme de disque (100) présentant un diamètre de 70 à 210 mm est produit par polissage des deux troisièmes surfaces principales circulaires de l'ébauche en verre en forme de disque meulée.

4. Procédé de fabrication d'un substrat en verre en forme de disque (100) selon l'une quelconque des revendications 1 à 3, dans lequel, lors du polissage (S4), le substrat en verre en forme de disque (100) présentant un parallélisme inférieur à 1,0 $\mu$m est produit par polissage des deux troisièmes surfaces principales circulaires de l'ébauche en verre en forme de disque meulée.

5. Procédé de fabrication d'un substrat en verre en forme de disque (100) selon la revendication 4, dans lequel, lors du polissage (S4), le substrat en verre en forme de disque (100) présentant un parallélisme de 0,05 à 0,95 $\mu$m est produit par polissage des deux troisièmes surfaces principales circulaires de l'ébauche en verre en forme de disque meulée.

6. Procédé de fabrication d'un substrat en verre en forme de disque (100) selon l'une quelconque des revendications 1 à 5,

dans lequel, lors du chanfreinage (S2), les premières surfaces de chanfreinage (103c, 103d) sont formées par chanfreinage des parties de bord extérieures (104c, 104d) par traitement mécanique ou traitement chimique, et

lors du meulage (S3) et du polissage (S4), les deux deuxièmes surfaces principales circulaires (101e, 101f) de l'ébauche en verre en forme de disque chanfreinée (107b) sont meulées et polies avec une tolérance d'usinage dans une plage, dans laquelle au moins des parties des deuxièmes surfaces de chanfreinage (103c, 103d) restent.

7. Procédé de fabrication d'un substrat en verre en forme de disque (100) selon l'une quelconque des revendications 1 à 6, dans lequel, lors du polissage (S4), le substrat en verre en forme de disque (100), qui présente la troisième épaisseur de substrat (t3) de 100 à 350 $\mu$m

et présente un diamètre de 70 à 210 mm et dans lequel un parallélisme entre deux quatrièmes surfaces principales circulaires (101a, 101b) du substrat en verre en forme de disque (100) est inférieur à 1,0 $\mu$m, est produit par polissage, lors de multiples étapes, des deux troisièmes surfaces principales circulaires de l'ébauche en verre en forme de disque meulée de telle sorte que 20 $\mu$m $\leq$ D < 150 $\mu$m est satisfaite, où D est une tolérance d'usinage du polissage.

8. Procédé de fabrication d'un substrat en verre en forme de disque (100) selon l'une quelconque des revendications 1 à 7,

dans lequel le polissage (S4) comporte
la réalisation du premier polissage (S41) pour polir les deux troisièmes surfaces principales circulaires de l'ébauche en verre en forme de disque meulée en utilisant l'appareil de polissage double face, et
la réalisation d'un deuxième polissage (S42) pour polir deux surfaces principales circulaires de l'ébauche en verre en forme de disque sur laquelle le premier polissage (S41) a été réalisé en utilisant l'appareil de polissage double face, et
une combinaison de tampons de polissage et d'une suspension de polissage qui sont appliqués sur l'appareil de polissage double face diffère entre le premier polissage (S41) et le deuxième polissage (S42).

9. Procédé de fabrication d'un substrat en verre (114), comprenant :
la découpe (S6) d'une pluralité de substrats en verre (114) à partir du substrat en verre en forme de disque (100) fabriqué par le procédé selon l'une quelconque des revendications 1 à 8.

10. Procédé de fabrication d'un substrat en verre (114) selon la revendication 9,
dans lequel, lors de la découpe (S6) de la pluralité de substrats en verre, des substrats en verre rectangulaires (114) sont découpés.

11. Procédé de fabrication d'un substrat en verre (114) selon la revendication 9 ou 10,
dans lequel, lors de la découpe (S6) de la pluralité de substrats en verre, des substrats en verre (114), qui présentent chacun une épaisseur de substrat de 100 à 350 $\mu$m et dans lesquels un parallélisme entre deux surfaces principales de chaque substrat en verre (114) est inférieur à 1,0 $\mu$m, sont découpés.

12. Procédé de fabrication d'une plaque de guidage de lumière, comprenant :

la découpe (S6) d'une pluralité de substrats en verre (114) à partir du substrat en verre en forme de disque (100) fabriqué par le procédé selon l'une quelconque des revendications 1 à 8 ; et l'empilement (S7) des substrats en verre découpés (114) les uns sur les autres pour produire une plaque de guidage de lumière (115).

# FIG.1

# FIG.2

# FIG.3

```
┌────────────────────────────────┐
│ Method for manufacturing       │
│ disk-shaped glass substrate    │
└────────────────────────────────┘
                │  S1
                ▼
┌────────────────────────────────┐
│ Prepare disk-shaped glass blank│
└────────────────────────────────┘
                │  S2
                ▼
┌────────────────────────────────┐
│         Chamfering             │
└────────────────────────────────┘
                │  S3
                ▼
┌────────────────────────────────┐
│          Grinding              │
└────────────────────────────────┘
                │  S4
                ▼
┌────────────────────────────────┐
│                  Polishing     │
│                      S41       │
│  ┌──────────────────────────┐  │
│  │     First polishing      │  │
│  └──────────────────────────┘  │
│              │  S42            │
│              ▼                 │
│  ┌──────────────────────────┐  │
│  │    Second polishing      │  │
│  └──────────────────────────┘  │
└────────────────────────────────┘
                │  S5
                ▼
┌────────────────────────────────┐
│          Cleaning              │
└────────────────────────────────┘
                │
                ▼
┌────────────────────────────────┐
│ Completion of                  │
│ disk-shaped glass substrate    │
└────────────────────────────────┘
```

# FIG.4

107a

CS2

101c

101d

Up
Left
Rear
Front
Right
Down

# FIG.5

107a

104c

101c

102b

104d

101d

t1 [mm]

# FIG.6

# FIG.7

# FIG.8

Step S5

↓

S6

Cutting out

↓

Completion of
thin glass substrate

# FIG.9

114

100

101a

101b

Up

Left ← → Rear

Front ↙ ↘ Right

Down

# FIG.10

Step S6

↓

| Stacking | S7 |

↓

Completion of
light-guiding plate

# FIG.11

115

114
114
114
114

Up

Left    Rear

Front    Right

Down

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017018375 A1
- WO 2013100154 A1
- JP 5533355 B
- JP 2015181082 A
- WO 2016190230 A1
- WO 2013031547 A1